# EUROPÄISCHE PATENTSCHRIFT

(11) **EP 0 958 521 B1**
(45) Veröffentlichungstag und Bekanntmachung des Hinweises auf die Patenterteilung: **20.08.2003**
(21) Anmeldenummer: 98909324.0
(22) Anmeldetag: 03.02.1998
(51) Int. Cl.: G02B 27/01, G02B 5/32, G03B 21/62

(54) **HOLOGRAFISCHER ANZEIGESCHIRM FÜR FLUGZEUGE UND FAHRZEUGE**
HOLOGRAPHIC DISPLAY SCREEN FOR AIRPLANES AND VEHICLES
ECRAN D'AFFICHAGE HOLOGRAPHIQUE POUR AERONEFS ET VEHICULES

(30) Priorität: 07.02.1997 DE 19704740
(43) Veröffentlichungstag der Anmeldung: 24.11.1999
(73) Patentinhaber: EADS Deutschland GmbH, 85521 Ottobrunn (DE)
(72) Erfinder: HALLDORSSON, Thorsteinn, D-81925 München (DE); LUCAS, Hannes, D-86874 Zaisertshofen (DE); SCHMIDT-BISCHOFFSHAUSEN, Horst, D-85579 Neubiberg (DE)
(86) Internationale Anmeldenummer: DE9800301
(87) Internationale Veröffentlichungsnummer: WO98035260

(56) Entgegenhaltungen:
- DE-A- 3 419 098
- FR-A- 2 640 772
- FR-A- 2 699 289
- US-A- 4 960 311
- US-A- 4 984 856
- US-A- 5 372 900
- CAULFIELD H.J.: 'Handbook of Optical Holography', 1979, ACADEMIC PRESS, NEW YORK Seiten 373 - 379

## Beschreibung

Die Erfindung betrifft die Herstellung und Anwendungen eines holografischen Bildschirms als Anzeigeinstrument zum Führen von Land- und Wasserfahrzeugen und Flugzeugen oder deren Simulation mit Hilfe vollfarbiger Laserprojektion.

Die Daten, die beim Führen eines Fahrzeuges z.B. eines Kraftwagens oder eines Flugzeuges dem Fahrer oder Piloten angezeigt werden, können grob in zwei Kategorien unterteilt werden, nämlich zum einen in Informationen über den aktuellen Betrieb und technischen Zustand wichtiger Einzelsysteme (Betriebsstoffmenge, Drücke, Temperaturen, Drehzahl, Betriebsarten usw.) und zum anderen in Informationen, die der Fortbewegung, Navigation und Zielfindung (Geschwindigkeit, Höhe, Lage, Ort, Richtung usw.) dienen.

Im naher Zukunft ist damit zu rechnen, daß sowohl die Menge und Vielfalt der verfügbaren aktuellen Daten in den beiden Kategorien zunimmt. Es werden weitere aktuelle Daten über den technischen Zustand des Kraftwagens wie Reifendruck und Bremssystem oder beim Flugzeug über die Vereisung von Tragflächen, Strömungsabriß und Materialermüdung sowie verbesserte Daten über die Wegstrecke zum Ziel, Straßenzustand, Staus, Kollisionsgefahr, günstigste Route und Wetterlage zu Verfügung stehen.

Während der Entwicklung der Passagierflugzeuge der letzten 30 Jahre hat die ständige Zunahme der Daten nicht zu einer erhöhten Belastung der Piloten, sondern im Gegenteil durch die Automatisierung von vielen Flugzeugfunktionen, verbessertem Datenmanagement und verbesserter Anzeige geführt. Dadurch konnte beispielsweise der Funkoffizier und Bordingenieur eingespart werden. In den letzten zehn Jahren hat neben der zunehmenden Verwendung von Computern im Flugzeugbetrieb und in der Flugführung eine weitere Entwicklung in Form einer variablen Anzeige der Zustands- und Führungsdaten in Displays angefangen, die einen Großteil der starren Anzeigeinstrumente ersetzen konnten (Glascockpits). Der Vorteil hierbei ist, daß die Anzeige nur erscheint, wenn sie gebraucht wird. Sie kann vom Piloten aufgerufen werden bzw. erscheint automatisch in kritischen Situationen.

Eine ähnliche Entwicklung ist beim Kraftfahrzeug bald zu erwarten, d.h. die klassischen festen Anzeigeinstrumente über Kraftstoff, Öldruck, Motortemperatur, Drehzahl, gefahrene Kilometer und Geschwindigkeit werden verschwinden und durch ein gemeinsames Display ersetzt, das entweder automatisch oder auf Abruf die aktuelle oder benötigte Information verzögerungsfrei darstellt. Eine Reihe weiterer generierter Daten sind bei Fahrzeugen in Kürze verfügbar, wie z.B. Anhalteweg, Abstand beim Parken, Verkehrsleitinformationen usw., die auf einem universellen Anzeigeinstrument dargestellt werden müssen.

Die technischen Anforderungen, die an eine zukünftige Anzeige im Fahrzeug gestellt werden, sind vor allem eine verbesserte Sichtbarkeit bei sehr hellem Hintergrund, verbesserte Farbdarstellung, höherer Kontrast und feinere Bildauflösung. Weiterhin wird verlangt, daß sowohl der Ort der Anzeige auf dem Bildschirm als auch seine Größe, Gestalt und Helligkeit kontinuierlich veränderbar sind.

In der Druckschrift FR 2 699 289 A ist ein holografischer Bildschirm beschrieben, der durch eine Hologrammaufnahme mit einem diffus streuenden Schirm als Objekt hergestellt wird. Dabei wird eine holografische Aufnahmeschicht mit einem divergenten Referenzstrahl beleuchtet, während der diffus streuende Schirm erhellt wird, um einen Objektstrahl auf die holografische Aufnahmeschicht zu senden. In der holografischen Aufnahmeschicht entsteht durch die Überlagerung von Objektstrahl und Referenzstrahl eine Phasengitterstruktur. Nach der Aufnahme wird die holografische Schicht auf einer Seite mit einer lichtabsorbierenden Schicht abgedeckt, um den holografischen Bildschirm zu schaffen.. Die holografische Schicht kann auch als Master für eine optische Vervielfältigung dienen.

Ein Nachteil der heute gebräuchlichen Anzeigetechnik im Armaturenbrett unter dem Gesichtsfeld des Piloten oder Fahrers nach außen ist, daß die Anzeige nur durch Nicken des Kopfes nach unten und Betrachtung der Anzeige im Nahfeld gelesen oder betrachtet werden kann. Außer dieser Unterbrechung der Beobachtung der Umgebung, die vor allem beim Fahren eines Wagens eine erhebliche Störung der Beobachtung bedeutet, muß das Auge zwischen beiden Beobachtungen neu akkommodieren und sich in einer veränderten Szene zurechtfinden, was häufig zu Unfällen führt.

Seit einiger Zeit werden neue Anzeigeverfahren für Kampflugzeuge entwickelt und zum Teil eingesetzt, die den Piloten dadurch entlasten, daß die Anzeige als virtuelles Bild in sein Blickfeld bzw. Blickrichtung durch das Cockpitfenster eingeblendet wird. Ein virtuelles Bild hat den Vorteil, daß es im Unendlichen erscheint und deshalb zum Betrachten keine oder nur eine geringe Änderung der Akkomodation des Auges verlangt. Dies ist von wesentlichem Vorteil in der schnell wechselnden Szene eines niedrig fliegenden Kampfflugzeuges, wo auch schnelle Entscheidungen bei ständig veränderlichen Instrumentenanzeigen vom Piloten verlangt werden. Die virtuelle Anzeige wird entweder auf eine transparente Glasscheibe vor der Windschutzscheibe oder in eine Brille in dem Piloten aufgesetzten Helm projiziert.

Die von einem einfarbigen CRT-Schirm generierten Anzeigen werden mit einem schmalbandigen Reflektor, der nur die Wellenlänge des Anzeigschirmes reflektiert und das breitbandige Licht aus dem Fenster oder von Anzeigen im Instrumentenbrett durchläßt, erzeugt. Die Abbildungsoptik wird gleichzeitig so ausgelegt, daß die Anzeige des Schirmes im Blickfeld des Piloten als virtuelles Bild erscheint. Anzeigeanordnungen dieser Art, die in der Fachsprache als Head-up-displays (HUDs) bezeichnet werden, sind z.B. in den folgenden Veröffentlichungen beschrieben: M.H. Freeman, Head-Up Displays-A Review. Optics Technology, Feb. 69, pp 63-70 und R.J. Withrington, "Optical Design of a Holographic Visor Helmet-Mounted Display, Computer Aided Optical Design", Proc. SPIE Vol. 14, pp 161-170.

Es sind auch Versuche bekannt, HUDs, in die Windschutzscheibe von PKWs zu integrieren: W.Windeln, M.A. Beeck, Windschutzscheibe mit Holographischem Spiegel für Head-Up Displays, ATZ Automobiltechnische Zeitschrift 91 (1989) Heft 10, S. 2-6. In der Offenlegungsschrift DE 37 12 663 A1 über ein "Anzeigesystem zum möglichst akkomodationsfreien Ablesen von Informationen bei auf Fernsicht eingestelltem Auge" wird ein Anzeigesystem vorzugsweise fiir Kraftfahrzeuge beschrieben, das die anzuzeigende Information als virtuelles Bild in die Frontscheibe oder im Bereich des Armaturenbrettes darstellt.

Diese Versuche und Vorschläge, die HUD Technologie aus der Anwendung im Kampflugzeug zu übertragen, setzten aber wie die herkömmliche Technik CRTs und LCDs als bildererzeugende Elemente voraus und sind daher den gleichen Begrenzungen hinsichtlich geringer Helligkeit, mäßiger Auflösung und schwachem Grauwert- und Farbkontrastes unterworfen. Ein gravierender Nachteil der bestehenden Technik ist, daß sie nur einfarbige grüne Bilder darstellen kann, was die Möglichkeiten der differenzierten Informationsgestaltung über Farben ausscheidet. Weitere Probleme dieser Art von Anzeige sind der begrenzte Betrachtungswinkel von nur einigen zehn Grad und die unruhige Bewegung des Bildes bei schnellen Kopfbewegungen.

Dies liegt daran, daß die HUDs, wie sie heute gestaltet sind, ein optisches Element analog einem Linsensystem in Kombination mit einem farbselektiven Spiegel darstellen. Mit Hilfe der Linse, die im HUD als diffraktive Struktur eines holografischen Element realisiert ist, wird das Bild eines Monitors nach der Umlenkung über den Spiegel als ein Bild im weiten Abstand durch das Fenster gesehen. Da der Spiegel nur selektiv das grüne Licht bei der Wellenlänge des Aufnahmelasers des Hologramms, was mit der Farbe des Monitors übereinstimmt, reflektiert, geht der größte Anteil des Umgebungslichts durch das Hologramm ungehindert durch.

Da diese Funktionen von bisherigen HUDs nur in einem engen Winkelbereich erfüllt werden können, blieben sie deshalb auf die Anwendung im Kampflugzeug beschränkt. Im Passagierflugzeug und im Auto wird ein relativ weiter Beobachtungswinkel verlangt, damit z.B. der Copilot oder der Beifahrer ebenfalls die Anzeige wahrnehmen kann. Außerdem wäre hier auch eine Anzeige über die Breite des Außenfensters von großem Vorteil.

Bei einer verbesserten Technik von HUDs, die auch in Passagierflugzeugen und Autos eine Anwendungen finden könnten, wären folgende Anforderungen zu erfüllen:
- Geringes Gewicht, geringe Einbautiefe
- vibrationsfest und beschleunigungsfest für vorgesehenen mobilen Betrieb
- Ausnutzung der maximalen Darstellungsfläche
- Ablesbarkeit bis ca. 60 Grad Blickwinkel
- Maximale Flächennutzung durch ungeteilte Darstellungsfläche
- zentrale Anzeige kritischer Informationen
- variable, sequentielle oder überlagerte Darstellung vieler Informationen
- Farbfähigkeit
- mindestens 4 Millionen Bildpunkte pro Display (Auflösung ca. 0,5 Winkelminuten)
- Bildaufbaufrequenz des Vollbildes mindestens 100 Hz
- holografisches Display zur Ausnutzung dreidimensionaler Darstellung und/oder akkomodationsfreier Ablesbarkeit
- keine Reflexion von Auflicht

Der Erfindung liegt die Aufgabe zugrunde, ein neues Hologramm anzugeben, das im Blickfeld des Piloten oder Fahrers nach außen liegt und das den oben gestellten Anforderungen eines verbesserten HUDs für neue breite Anwendungsfelder genügt.

Die Aufgabe wird gelöst durch das Verfahren zur Herstellung eines holografischen Bildschirms gemäß Patentanspruch 1.

Zur Erfüllung dieser Anforderungen, die z.T. weder mit CRT- oder LCD-Displays realisert werden können, werden die besonderen Eigenschaften der Laser-Projektion ausgenutzt. Diese sind erstens die geringe Linienbreite und damit verbundene große Kohärenzlänge des Lichtes und zweitens die hohe Strahldichte, d.h. Lichtleistung pro Raumwinkel und Flächeneinheit. Die erste Eigenschaft kann zur effizienten Trennung von mehrfarbigen Laserlicht von dem Fremdlicht verwendet werden, die zweite ermöglicht eine Bildprojektion mit hoher Auflösung und starker Helligkeit. Als drittes ist die Farbqualität der Summation von drei monochromatischen Laserlinien im ausgewählten Wellenlängenbereich mit anderen Verfahren unerreichbar.

Anstatt eines abbildenden Elements als HUD, wird insbesondere ein Bildschirm als Objekthologramm verwendet, der so hergestellt ist, daß er nur bei der Beleuchtung mit einem Laser-Auflicht- bzw. Rücklichtprojektor ein Bild zu dem Betrachter wirft, aber das durch das Fenster breitbandige Licht durchläßt und damit die Sicht nach außen frei läßt. Der holografische Schirm wird insbesondere dahingehend optimiert, daß er selektiv das schmalbandige Laserlicht in einer oder mehreren Farben mit hohem Wirkungsgrad in einen definierten Raumwinkel beugt, aber das breitbandige Umgebungslicht weitgehend unbeinflußt transmittiert. Als Objekthologramm bringt diese neue Technik den besonderen Vorteil, daß sowohl eine große Bilddarstellungsfläche ausgeleuchtet werden kann und gleichzeitig ein breiter Betrachtungswinkel möglich wird.

Objekt dieses holografischen Bildschirms ist vorzugsweise ein angepaßter weißer Schirm, der vorzugsweise mit allen verwendeten Laser-Projektionswellenlängen in das Hologramm einbelichtet wird. Bei der Aufnahme wird dafür gesorgt, daß der Schirm mit dem Objektstrahl so ausgeleuchtet wird, daß seine Beugungs- oder Streucharakteristik die gleiche ist, wie sie später in der Anwendung erwünscht ist. Als Referenzstrahl bei der holografischen Aufnahme dient dabei ein aufgeweitetes Strahlenbündel, das von einem entsprechenden Ort, wie der spätere Projektionsstrahl herausgeht. Das Hologramm wird vorzugsweise als off-axis Hologramm aufgenommen und beleuchtet, d.h. der Projektionsstrahl fällt unter einem größeren Winkel zu der Normalen auf die Hologrammfläche, damit eine freie Sicht durch das Hologramm ohne Abschattung durch den Projektor entsteht.

Je nach Anwendungsfall wird bevorzugt, daß der Projektor vor oder hinter dem Hologramm steht. Danach richtet es sich, ob das Hologramm als Reflexions- oder Transmissionshologramm mit einer Auflicht- bzw Rücklichtprojektion hergestellt wird. Zur Wiedergabe kann beim einen Hologramm entweder aufgeweiteter Bildprojektionsstrahl, ein punktuell oder zeilenförmig abtastender (scannender) Strahl verwendet werden.

Hierfür können alle heute bekannten Projektionsverfahren verwendet werden, z.B. das Lichtventilprinzip, in dem eine Bildmatrix mit Mikrospiegeln (Digital Mirror Device, DMD) oder Flüssigkristallen (Liquid Cristal Device, LCD) mit Laserbeleuchtung auf einen Schirm in einem raumfesten Projektionsstrahl geworfen wird. Auch die serielle Bildprojektion durch Laserscanner, wo das Bild Punkt für Punkt oder Zeile für Zeile aufgebaut wird, ist anwendbar.

Wird das Hologramm auf eine transparente Trägerplatte in optischem Kontakt aufgezogen, z.B. eine Glasplatte, erscheint der holografische Schirm unter flächenhafter Beleuchtung mit breitbandigem Umgebungslicht transparent wie die Trägerplatte, die vorzugsweise zur Unterbindung von Reflexionen entspiegelt ist.

Wird die Fläche des holografischen Schirms dagegen mit Laserstrahlen aus der richtigen Beleuchtungsrichtung, d.h. vom Ort des früheren festen Referenzstrahles flächenhaft beleuchtet oder abgetastet (gescannt), baut sich wieder das ursprüngliche Bild des Schirmes von Bildpunkt zu Bildpunkt, parallel oder seriell auf. Wird der Projektionsstrahl noch mit Bilddaten moduliert, entsteht für den Betrachter in der Aufzeichungsschicht das Bild, als würde es auf dem ursprünglichen Schirm erscheinen, nur mit den erfindungsgemäßen Verbesserungen.

Nur muß dafür gesorgt werden, daß bei der Aufnahme und Wiedergabe die gleichen oder annähernd gleichen Laserlinien verwendet werden und daß die Projektion von dem gleichen Ort wie der Referenzstrahl bei der Aufnahme des Hologramms ausgeht. Zur Sicherung einer hohen Bildqualität muß dafür gesorgt werden, daß die Ausdehnung der Bildquelle vom Schirm aus gesehen nähererungsweise einer Punktquelle entspricht. Diese letzte Forderung ist von gescannten Systemen immer erfüllt. Bei einer abgebildeten Bildmatrix mit 20 mm Diagonale und 200 mm Projektionsabstand beträgt die Größe der Bildquelle 6°, was einen Einfluß auf die Güte des Bildes haben kann. Da die Matrix mit gebündelter Laserstrahlung ausgeleuchtet wird, ist eine Verkleinerung der Quelle durch Zwischenabbildung unter 1°, die einer Punktquelle dann sehr nahe kommt, leicht zu realisieren.

Um beim Reflexionshologramm die benötigte Winkel- und Wellenlängenselektivität aufzuweisen, muß der holografische Bildschirm die Eigenschaften eines Volumenhologramms besitzen. Dies wird vorzugsweise durch die Aufnahme eines Volumenhologramms in Reflexion oder Transmission in eine oder mehrere "dicke" Aufnahmeschichten (ca. 5-30 µm) erreicht. Volumengitterstrukturen entstehen bei der Aufnahme und Verarbeitung des Hologramms als Abbild des Schirms unabhängig voneinander bei den verschiedenen verwendeten Wellenlängen. Unter der sogenannten Bragg-Interferenz-Bedingung der Gitterstruktur, die jedesmal nur für die eine Wellenlänge und einen Beleuchtungswinkel erfüllt ist, wird Licht zurückreflektiert bzw. durchgebeugt und es erscheint bei der Betrachtung des Hologramms eine helles Bild des Schirmes mit seiner ursprünglichen Streucharakteristik. Dies wiederholt sich für andere diskrete Wellenlängen mit deren zugeordneten Gitterstrukturen innerhalb der gleichen Schicht oder weiterer Schichten zu einem überlagerten Gesamtbild, was bei richtiger Farbabstimmung das Bild des ursprünglich weißen Schirms wiedergibt. Licht anderer Wellenlängen, sowie breitbandiges Licht wird wegen der fehlenden Übereinstimmung mit den Bragg-Bedingungen weitgehend ungeschwächt durchgelassen, wenn es nicht gerade aus der Richtung der Laserprojektion auffällt. Störlicht, das nicht in die +1-Beugungsordnung, wie z.B. Anteile der 0-ten und -1-Ordnung wird nicht zurückreflektiert sondern geht durch das Hologramm hindurch, wo es leicht ausgeblendet werden kann.

Es können sowohl "dicke" als auch "dünne" Transmissionshologramme zur Betrachtung in transmittierten Licht verwendet werden. Die Entscheidung, welche Art verwendet wird, richtet sich nach den verfügbaren Aufnahmemateralien, ihren Kosten, dem angestrebten Beugungswirkungsgrad und der Art der Wiedergabe. Mit dicken Hologrammen kann insbesondere eine hohe Winkel- und Wellenlängenselektivität bei der Wiedergabe erreicht werden.

In der hier vorgeschlagenen Aufnahme eines dünnen Hologramms wird zunächst der Schirm als zweidimensionale Gitterstruktur einbelichtet. Es wird die bekannte Aufnahmegeomtrie nach Leith und Upatnieks verwendet mit einem divergenten Referenzstrahl. Der Schirm erscheint bei der Wiedergabe mit einem Projektionsstrahl, der dem Referenzstrahl entspricht, als virtuelles Bild (in der ersten Beugungsordnung) und kann als solcher auch direkt verwendet werden. Die störendene Lichtanteile in der 0-ten Beugungsordnung und den anderen Beugungsordnungen werden minimiert und außerhalb des Hologramms absorbiert.

Wie bei anderen Hologrammen dieser Art erscheint das Bild des Schirmes hinter der Hologrammplatte am gleichen Ort wie bei der Aufnahme.

Erfindungsgemäß wird für weitere Anwendungen vorgeschlagen, das Transmissionshologramm des Schirmes in zwei Stufen herzustellen. Der erste Schritt ist dann der gleiche wie der oben beschreibene. Nur wird hier anstatt des virtuellen Bildes das reelle Bild des Schirmes als Objekt für eine zweite Aufnahme verwendet und dahingehend optimiert. Dies hat den Vorteil, daß damit die Lage des Schirmbildes bei der Wiedergabe gegenüber der Hologrammplatte frei gewählt werden kann, in der Ebene und vor und hinter dieser. Für die meisten Anwendungen werden jedoch Schirmbilder mit der Lage des Schirmes weit hinter dem Schirm erwünscht.

In den Strahlengang des reellen Bildes können auch verschiedene optische Elemente wie Linsen, gekrümmte Spiegel bzw. holografisch-optische Elemente eingebaut werden, die das Bild des Schirmes in der Kopie dann optisch verändern, z.B. vergrößern und in einen weiten Abstand versetzen.

Nach der Herstellung des Bildschirmhologramms können zusätzliche optische Abbildungselemente wie Linsen, gekrümmte Spiegel bzw. holografisch-optische Elemente in den Strahlengang zum Betrachter integriert werden, die das Bild geometrisch verändern, z.B. vergrößern oder verkleinern.

Ein weißer holografischer Schirm wird, wie vorhin erläutert, vorzugsweise durch Aufnahme eines Schimes mit allen verwendeten Laserwellenlängen, z.B. rot, grün und blau (RGB) in das gleiche Hologramm hergestellt. Hier ergeben sich drei verschiedene Ausführungsmöglichkeiten. Als erstes können drei Belichtungen aller Farben in eine Aufnahmeschicht durchgeführt werden. Als zweites können mehrere Schichten unterschiedlicher spektraler Sensitivität, an die verschiedenen Laserwellenlängen angepaßt aufgestapelt werden. Als drittes können die verschiedenen Aufnahmemateralien nebeneinander angeordnet sein, beispielsweise punktförmig als RGB-Tripel innerhalb jedes Bildpunktes in Dreiecksanordnung wie die Phosphore einer Fernseh-Delta-Schattenmaskenröhre oder als drei benachbarte vertikale RGB-Streifen, wie die Phosphore in der bekannten Fernseh-Trinitronröhre.

Eine Aufnahme von Hologrammen mit drei unterschiedlichen Farben in einer einzigen dünnen Schicht, wie in dem ersten Alternativverfahren vorgeschlagen, hat das Problem, daß jede einzelne Gitterstruktur auch das Licht der anderen Wellenlänge beugt. Bei einem solchen Schirm entstehen bei dreifarbiger Projektion 9 verschiedene Streukeulen in 3 unterschiedlichen Farben, von denen drei zu einer weißen Keule zusammenfallen, die dann das eigentliche Betrachtungslicht liefert. Die anderen Strahlkeulen können durch Ausblendung mit Zusatzhologrammen, wie später angegeben, unterdrückt werden.

In einem Stapelaufbau der Schichten können z.B. drei verschiedene, an die Farben angepaßten Aufnahmemateralien verwendet werden. Durch die Verwendung von drei lateral angeordneten Schichten für die verschiedenen Farben, kann zusätzlich das Farbübersprechen,wie bei der Kathodenstrahlröhre unterbunden werden.

Die Erfindung sieht weiterhin vor, daß "dicke" Transmissions-Hologramme für die Schirmaufnahmen verwendet werden, vor allem in Anwendungen bei denen eine hohe Selektivität des Hologramms in Bezug auf Wiedergabewellenlänge und Einstrahlrichtung von Vorteil ist.

In dicken Hologrammen bildet sich bei der Aufnahme ein Volumengitter in der Aufnahmeschicht von in der Regel 5-30 µm Dicke. Bei der Wiedergabe gilt dann wegen der Interferenz benachbarter gegeneinan der phasenverschobenen Teilstrahlen die Bragg-Bedingung für die konstruktive Interferenz. Damit ist eine starke Beugungseffizienz für die Aufnahmewellenlängen und die Beleuchtungsrichtung der Referenzstrahles in den Schirm integriert und breitbandiges Licht geht zum größten Teil ungehindert durch.

Wie bei einem "dünnen" Hologramm können entweder mehrere Aufnahmen des Schirmes bei unterschiedlichen Farbe in der gleichen Hologrammschicht, in unterschiedlichen aneinandergerehten oder nebeneinander angeordneten Schichten mit angepaßter Farbempfindlichkeit aufgenommen werden.

Durch den Einbau von optischen Zusatzelementen in den Strahlengang des Referenzstrahles oder des Objektstrahls kann das holografische Bild des Schirmes sowohl bei Reflexions- als auch Transmissionshologrammen beeinflußt werden.

Damit kann z.B. der Abstrahlwinkel des holografischen Schirmes gegenüber dem Originalschirm in Elevation und Azimuth verändert werden, die Helligkeitsverteilung über den Schirm kann anders eingestellt werden und Bildfehler der Projektionsoptik können nachträglich verbessert werden.

Als Aufnahmemateralien für die dünnen Hologramme eignen sich z.B. Silberhalogenidmaterial oder Photoresist. Für die dicken Hologramme kommen vorzugsweise Silberhalogenidmaterial, Dichromat-Gelatine oder Photopolymer-Material in Frage.

Die Herstellung solcher holografischer Bildschirme für Auf- und Rückprojektion mit Lasern ist oben beispielhaft beschreiben worden. Sie kann jedoch auf einer Vielzahl von verschiedenen Wegen und in unterschiedlichen Schritten erfolgen, die dem Fachmann bekannt und verständlich sind. Einige dieser Schritte sind bereits in den älteren deutschen Patentanmeldungen 197 00 162.9 und 197 03 592.2 für holografische Bildschirme in Aufund Rückprojektion mit angekoppeltem optischen Absorber beschrieben und können hier fiir diese neue veränderte Aufgabenstellung übernommen werden.

Die Erfindung wird im folgenden anhand der in den Figuren teilweise schematisch dargestellten Ausführungsbeispielen näher beschrieben. Es zeigen:
Fig. 1 die Direktaufnahme eines Reflexionshologramms eines Objektschirmes nach dem bekannten Verfahren von Yu. N. Denisyuk in Transmission,
Fig. 2 die Beobachtung des holografischen Abbildes des Schirmes im Reflexionhologramm,
Fig. 3 die Aufnahme eines Transmissionhologramms eines Objektschirmes in Reflexion nach dem bekannten Verfahren von Leith und Upatniek,
Fig. 4 die Beobachtung des holografischen Abbildes des Schirmes im Transmissionhologramm und
Fig. 5 die Ergänzung des Transmissionshologramms mit einerm Reflexionshologramm zur Unterdrückung von Störlicht.

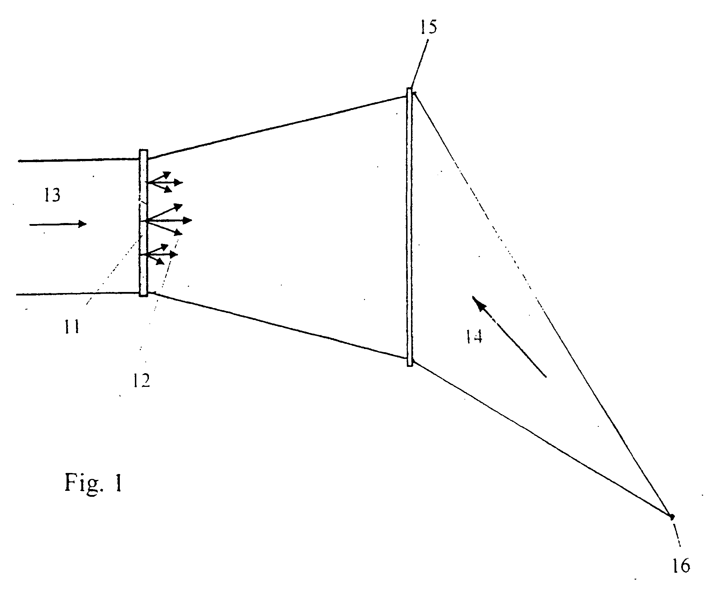

Fig. 1 zeigt die Aufnahme eines transparenten Schirms 11 in Reflexionstechnik. Das aus dem Schirm vorwärts diffus gestreute Licht 12 des Objektstrahles 13 überlagert sich mit dem Referenzlicht 14. Hier fällt der Referenzstrahl aus der Punktquelle 16 von der entgegengesetzten Seite auf die Hologrammplatte 15 gegenüber dem Objektlicht 12. Die Beleuchtung des Schirms geschieht hier vorzugsweise von hinten, wobei sich z.B. Vorteile der bezüglich Lichtstärke der Anordnung ergeben und korrigierende Maßnahmen bezüglich der Streulichtverteilung im Objekt- oder Referenzstrahl leicht möglich sind.

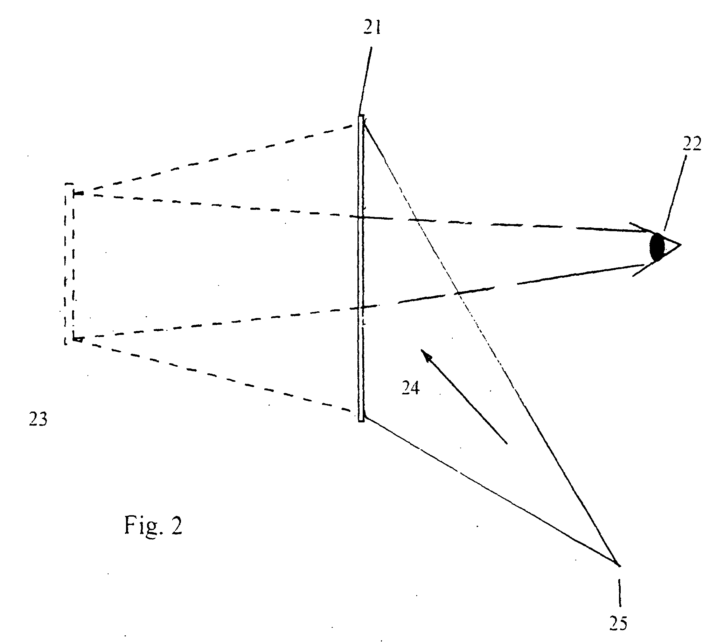

Fig. 2 zeigt die Bildprojektion auf das Reflexionshologramm 21 und Beobachtung 22 des virtuellen Schirmbildes 23. Der Projektionsstrahl 24 geht vom gleichen Ort 25 aus wie der Referenzstrahl in Fig. 1. Das virtuelle Schirmbild, erscheint an der gleichen Stelle wie der Objektschirm bei der Aufnahme in Fig. 1.

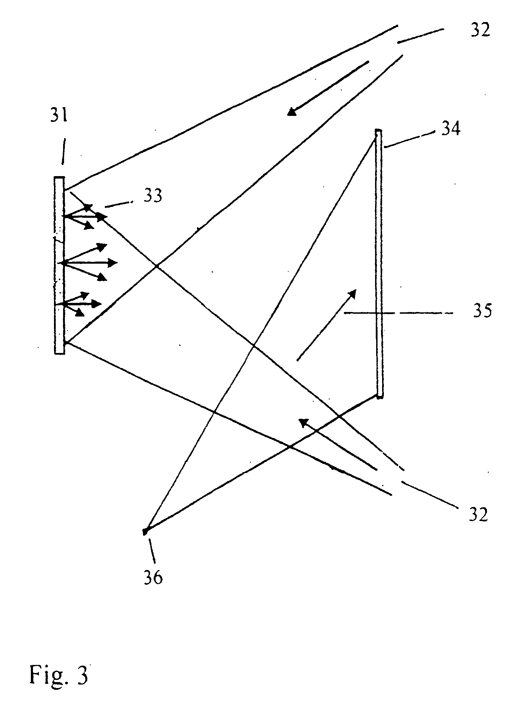

Fig. 3 zeigt die Aufnahme eines reflektierenden Schirms 31 in Transmissionstechnik. Das Beleuchtungslicht 32 fällt aus mehreren Richtungen auf den Schirm. Das rückgestreute Licht aus dem Schirm 33 wird im Hologramm 34 mit dem divergenten Referenzstrahl 35 aus dem Ort 36 überlagert.

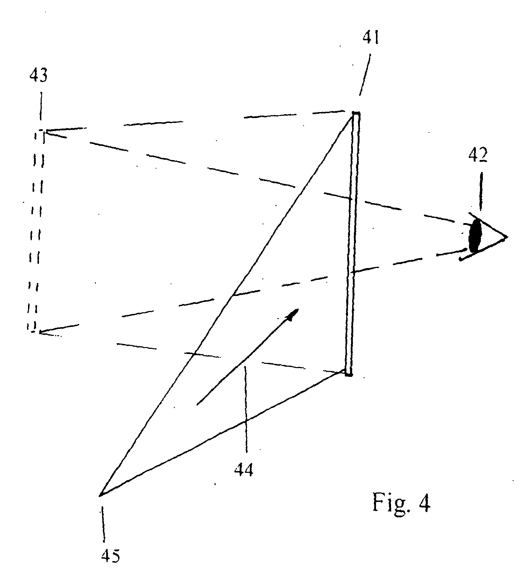

Fig. 4 zeigt die Bildprojektion auf das Transmissionshologramm 41 und Beobachtung 42 des virtuellen Schirmbildes 43. Der Projektionsstrahl 44 geht von gleichen Ort 45 aus wie der Referenzstrahl in Fig. 3. Das virtuelle Schirmbild, erscheint an der gleichen Stelle wie der Objektschirm bei der Aufnahme in Fig. 3.

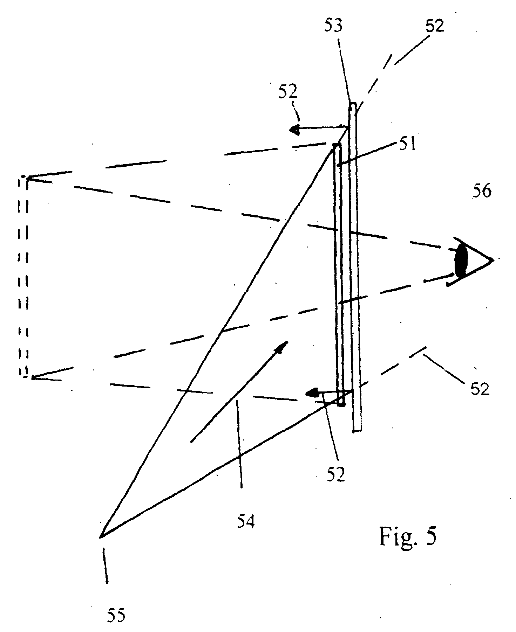

Fig. 5 zeigt die Vermeidung von Störlicht aus dem holografischen Schirm. Bei dem Transmissionshologramm 51 geht ein geringer Teil des auffallenden Lichtes als 0-te Ordnung 52 ohne Umlenkung durch das Hologramm hindurch. Dieses Störlicht kann durch ein Reflexionshologramm des Schirmes 53, das für den gleichen Projektionsstrahl 54 aus der gleichen Quelle 55 ausgelegt ist, effizient zurückgestreut werden, damit es nicht in den Raum neben dem Beobachter 56 gelangt.

Mit den hier oben beschriebenen Verfahren werden Bildschirme als Reflexions- bzw. als Transmissionshologramme in dem ersten Schritt aufgenommen. Der Objektschirm wird als Vorlage gebraucht, um von dem Objektschirm sogenannte Masterhologramme, die reelle Bilder des Schirmes erzeugen, herzustellen. Der Master kann nun als Objektvorlage für weitere Aufnahmen des Bildschirmes in einem zweiten Schritt verwendet werden. Dieses zweistufige Verfahren erweitert die Möglichkeiten, das endgültige Bildschirmhologramm in Bezug auf Bildlage, Streucharakteristik und Helligkeitsverteilung zu beeinflussen.

Die Schirmvorlage für die holografischen Aufnahmen braucht nicht plan zu sein, sondern kann beliebige dreidimensionale Oberflächenstruktur haben. Für spezielle Projektionen können z.B. gekrümmte oder gewölbte Hologrammschirme von Vorteil sein.

Durch den Einbau von optischen Zusatzelementen im Strahlengang des Referenz- oder Objektstrahls kann das holografische Bild des Schirms beeinflußt werden, z.B. in der Helligkeitsverteilung der Wiedergabe, räumlicher Abstrahlcharakteristik oder zur gezielten Korrektur von Bildfehlern, die bei der Projektion auftreten.

An die Stelle von interferenzoptisch aufgezeichneten Masterhologrammen können auch computergenerierte, bzw. von computergenerierten Hologrammen erzeugte Hologramme treten, in die rechnerisch eine bestimmte Streufunktion niedergelegt worden ist.
Es versteht sich nach dem dem vorgesagten, daß der holografische Schirm für das HUD im Sinne der Erfindung für eine oder mehrere Laserlinien verwendet werden kann. Diese Laserlinien müssen nicht zwingend im sichtbaren Spektrum liegen, sondern können bei Verwendung von geeigneten Aufnahmemateralien auch im UV- oder IR- Bereich, zur Aufnahme von Bildern mit technischen Sensoren wie Kameras Photodetektoren oder Photodetektorarrays dienen.

Obwohl hohe Anforderungen an die spektrale Schmalbandigkeit (zeitliche Kohärenz) der Beleuchtungsquelle fiir die Bildschirmaufnahmen gestellt werden, können bei der Wiedergabe, sowohl Lichtquellen mit einzelnen scharfen Spektrallinien wie Laser oder Gasentladungslampen als auch gefilterte breitbandige Lampen wie Halogen- oder Glühlampen verwendet werden.

Bei der Anwendung des holografischen Bildschirms als "Head-up-Display" im Flugzeug uder Fahrzeug kann es entweder vor der Windschutzscheibe aufgestellt oder in diese integriert werden.

Der holografische Bildschirm kann auch als sogenanntes "Helm-mounted-Display" (HMD) verwendet werden, wo er in die offene Brille des Helms eingebaut ist von der Seite in Auf- oder Rückprojektion beleuchtet wird.

Der erfindungsgemäße holografische Bildschirm kann z.B. folgende weitere Merkmale aufweisen:

Er kann z.B. mindestens ein holografisches Reflexions Volumengitter oder mindestens ein holografisches Transmissions Volumengitter aufweisen.

Die Trägerplatte kann eine zusätzliche Vergütungsschicht (Entspiegelungsschicht) aufweisen.

Der holografische Bildschirm hat z.B. drei holografische Oberflächengitter, die drei Grundfarben zugeordnet sind. Auch kann er drei holografische Volumengitter aufweisen, die drei Grundfarben zugeordnet sind. Z.B. können die drei holografischen Volumengitter in einer Schicht enthalten sein.

Auch kann er die drei holografischen Volumengitter in mehreren Schicht enthalten.

Der holografische Bildschirm hat z.B. schmalbandige Lichtdioden als Lichtquellen zur Bildwiedergabe, anstatt der Laserquellen. Es kann aber eine spektral gefilterte breitbandige Lampe zur Bildwiedergabe vorgesehen sein.

Bei dem erfindungsgemäßen Verfahren zur Herstellung eines holografischen Bildschirms kann das Objekt ein diffus reflektierender Schirm sein, mit dem ein Transmissionsmaster hergestellt wird. Das Objekt kann auch ein diffus transmittierender Schirm sein, mit dem ein Transmissionsoder Reflexionsmaster hergestellt wird.

Bei der Aufnahme des Schirmhologramms aus dem Master kann die Bildebene des Schirmes in der Ebene des Hologramms liegen, oder sie kann in der Ebene vor der Ebene des Hologramms liegen. Auch kann bei der Aufnahme des Schirmhologramms aus dem Master die Bildebene des Schirmes hinter der Ebene des Hologramms liegen.

Es können z.B. optische Elemente in den Referenzstrahlengang eingebaut werden, die Bildfehler bei flächenhafter Projektion einer Bildmatrix kompensieren, oder die Bildfelder des Laserscanners kompensieren.

## Patentansprüche

1. Verfahren zur Herstellung eines holografischen Bildschirms für Laserprojektion, bei dem eine holografische Aufnahme zur Erzeugung eines Hologramms durchgeführt wird, wobei ein diffus streuender Schirm als Objekt verwendet wird und ein aufgeweitetes Strahlenbündel als Referenzstrahl dient,
**dadurch gekennzeichnet, dass**
in einer zweiten Stufe des Verfahrens aus dem zuvor erzeugten Hologramm ein reelles Bild des Schirmes hergestellt wird,
und das hergestellte reelle Bild als Objekt für eine zweite holografische Aufnahme verwendet wird, bei der ein zweites Hologramm erzeugt wird,
wobei das zweite Hologramm auf eine transparente Trägerplatte aufgezogen wird, um einen holografischen Bildschirm zu erzeugen, der für breitbandiges Umgebungslicht transparent ist, während er eine einfallende schmalbandige Lichtstrahlung selektiv in einen vorherbestimmten Raumwinkel streut.

2. Verfahren nach Anspruch 1, **dadurch gekennzeichnet, dass** als diffus streuender Schirm ein diffus reflektierender Schirm verwendet wird.

3. Verfahren nach Anspruch 1, **dadurch gekennzeichnet, dass** als diffus streuender Schirm ein diffus transmittierender Schirm verwendet wird.

4. Verfahren nach einem der Ansprüche 1 bis 3, **dadurch gekennzeichnet, dass** bei der Aufnahme des zweiten Hologramms die Bildebene in der Ebene des Hologramms liegt.

5. Verfahren nach einem der Ansprüche 1 bis 3, **dadurch gekennzeichnet, dass** bei der Aufnahme des zweiten Hologramms die Bildebene vor der Ebene des Hologramms liegt.

6. Verfahren nach einem der Ansprüche 1 bis 3, **dadurch gekennzeichnet, dass** bei der Aufnahme des zweiten Hologramms die Bildebene hinter der Ebene des Hologramms liegt.

7. Verfahren nach einem der vorhergehenden Ansprüche, **dadurch gekennzeichnet, dass** in mindestens einem der Aufnahmeschritte durch optische Zusatzelemente im Strahlengang Helligkeitsverteilung und Bildfehler korrigiert werden.

8. Verfahren nach einem der vorhergehenden Ansprüche, **dadurch gekennzeichnet, dass** in mindestens einem der Aufnahmeschritte optische Elemente im Referenzstrahlengang eingebaut werden, die Bildfehler eines Laserscanners kompensieren.

9. Verfahren nach einem der vorhergehenden Ansprüche, **dadurch gekennzeichnet, dass** optische Elemente im Referenzstrahlengang eingebaut werden, die Bildfehler bei flächenhafter Projektion einer Bildmatrix kompensieren.

10. Verfahren nach einem der vorhergehenden Ansprüche, **dadurch gekennzeichnet, dass** durch Mehrstrahlbeleuchtung des Schirms die Gesamtstreulichtverteilung des holografischen Bildschirms eingestellt wird.

## Claims

1. A method of producing a holographic display for laser projection, in which a holographic recording for generating a hologram is made, wherein a diffusely scattering screen is used as an object and an expanded beam bundle serves as a reference beam, **characterised in that**, in a second stage of the method, a real screen image is produced from the previously generated hologram, and the real image produced is used as an object for a second holographic recording, during which a second hologram is generated, the second hologram being mounted on a transparent supporting plate in order to generate a holographic display which is transparent for broad-band ambient light, while it selectively scatters an incident narrow-band light beam into a predetermined solid angle.

2. A method according to claim 1, **characterised in that** a diffusely reflecting screen is used as a diffusely scattering screen.

3. A method according to claim 1, **characterised in that** a diffusely transmitting screen is used as a diffusely scattering screen.

4. A method according to any one of claims 1 to 3, **characterised in that**, during the recording of the second hologram, the image plane lies in the plane of the hologram.

5. A method according to any one of claims 1 to 3, **characterised in that**, during the recording of the second hologram, the image plane lies upstream of the plane of the hologram.

6. A method according to any one of claims 1 to 3, **characterised in that**, during the recording of the second hologram, the image plane lies downstream of the plane of the hologram.

7. A method according to any one of the preceding claims, **characterised in that** brightness distribution and image defects are corrected in at least one of the recording steps by additional optical elements in the beam path.

8. A method according to any one of the preceding claims, **characterised in that**, in at least one of the recording steps, optical elements which compensate for image defects of a laser scanner are installed in the reference beam path.

9. A method according to any one of the preceding claims, **characterised in that** optical elements which compensate for image defects during planar projection of an image matrix are installed in the reference beam path.

10. A method according to any one of the preceding claims, **characterised in that** the total scattered-light distribution of the holographic display is adjusted by multibeam illumination of the screen.

## Revendications

1. Procédé de fabrication d'un écran holographique pour la projection laser, selon lequel on réalise une prise de vue holographique pour produire un hologramme, un écran à dispersion diffuse étant utilisé comme objet et un faisceau de rayons élargi servant de rayon de référence,
**caractérisé en ce que**
dans une deuxième étape du procédé, on fabrique une image réelle de l'écran à partir de l'hologramme produit précédemment et
on utilise l'image réelle fabriquée comme objet, pour une deuxième prise de vue holographique, au cours de laquelle un deuxième hologramme est produit,
le deuxième hologramme étant appliqué sur une plaque support transparente, pour produire un écran holographique qui est transparent pour la lumière ambiante à bande large, tandis qu'il disperse de manière sélective, sous un angle solide prédéterminé, un rayonnement lumineux incident à bande étroite.

2. Procédé selon la revendication 1, **caractérisé en ce qu'**on utilise comme écran à dispersion diffuse un écran à réflexion diffuse.

3. Procédé selon la revendication 1, **caractérisé en ce qu'**on utilise comme écran à dispersion diffuse un écran à transmission diffuse.

4. Procédé selon une des revendications 1 à 3, **caractérisé en ce que** dans la prise de vue du deuxième hologramme, le plan d'image est situé dans le plan de l'hologramme.

5. Procédé selon une des revendications 1 à 3, **caractérisé en ce que** dans la prise de vue du deuxième hologramme, le plan d'image est situé devant le plan de l'hologramme.

6. Procédé selon une des revendications 1 à 3, **caractérisé en ce que** dans la prise de vue du deuxième hologramme, le plan d'image est situé derrière le plan de l'hologramme.

7. Procédé selon une des revendications précédentes, **caractérisé en ce que** dans au moins une des étapes de prise de vue, la répartition de luminosité et les défauts d'image sont corrigés au moyen d'éléments optiques additionnels placés sur le chemin des rayons.

8. Procédé selon une des revendications précédentes, **caractérisé en ce que** dans au moins une des étapes de prise de vue, des éléments optiques qui compensent les défauts d'image d'un scanner à laser sont placés sur le chemin des rayons de référence.

9. Procédé selon une des revendications précédentes, **caractérisé en ce que** des éléments optiques qui compensent les défauts d'image dans le cas d'une projection plane d'une matrice d'image sont placés sur le chemin des rayons de référence.

10. Procédé selon une des revendications précédentes, **caractérisé en ce que** par un éclairage à plusieurs rayons de l'écran on règle la répartition de lumière dispersée de l'écran holographique.
